# EUROPÄISCHE PATENTANMELDUNG

(11) **EP 0 718 017 A2**
(43) Veröffentlichungstag der Anmeldung: **26.06.1996**
(21) Anmeldenummer: 95850230.4
(22) Anmeldetag: 18.12.1995
(51) Int. Cl.: B01D 19/00

(54) **Vorrichtung zur Abscheidung von Luft aus einer strömenden Flüssigkeit und Verfahren zur Herstellung der Vorrichtung**

(30) Priorität: 23.12.1994 DE 9420802 U
(71) Anmelder: Armaturjonsson AB, S-421 31 Västra Frölunda (SE)
(72) Erfinder: Johansson, Christer, S-439 37 Onsala (SE)
(74) Vertreter: Rostovanyi, Peter

(57) **Zusammenfassung**

Eine Vorrichtung zur Abscheidung von Luft aus einer strömenden Flüssigkeit umfasst einen Behälter (1), der von der Flüssigkeit in einer Richtung hauptsächlich quer zu seiner Mittelachse (2) durchströmt wird. Ein im Behälter (1) angebrachtes Auffangglied (4) ist vorgesehen, in der durchströmenden Flüssigkeit vorkommende kleinere Luftblasen, sog. Mikroblasen, aufzufangen, und diese Mikroblasen zu grösseren Luftblasen anzusammeln, die in einem oberen Teil (9) des Behälters (1) aufgefangen werden. Der Behälter (1) hat im oberen Teil (9) ein Ventil (11) zum Evakuieren von Luft. Das Auffangglied (4) umfasst eine Mehrzahl Schichten, die je eine grosse Anzahl kleiner Öffnungen aufweisen, durch welche die Flüssigkeit strömt. Die Schichten grenzen vertikale Kanäle ab und sind derart angeordnet, dass die Flüssigkeit gezwungen ist, durch mehrere Schichten zu strömen. Das Auffangglied (4), vorzugsweise ein spiralförmig gewundenes, feinmaschiges Netz, nimmt im wesentlichen den ganzen Querschnitt des Behälters (1) in dem von der Flüssigkeit durchströmten Bereich auf.

## Beschreibung

### Gebiet der Erfindung

Die vorliegende Erfindung ist auf die Abscheidung von Luft aus einer strömenden Flüssigkeit eingerichtet und betrifft eine Vorrichtung für eine derartige Abscheidung. In der Fachsprache werden Vorrichtungen dieser Art oft Luftabscheider oder Luftabsorber genannt.

### Stand der Technik

Eine strömende Flüssigkeit in Rohrsystemen wird in verschiedenen Bereichen verwendet, beispielsweise in Kühl- und Wärmeanlagen. Die strömende Flüssigkeit enthält aber oft unerwünschte Luftblasen, die sich bilden können, beispielsweise weil die Flüssigkeitstemperatur erhöht wird, und die in bekannter Weise aus der Flüssigkeit abgeschieden werden. Die Luftblasen verursachen verschiedene Probleme, z.B. eine erhöhte Korrosionsgefahr, eine verschlechterte Wärmeübertragung sowie ein störendes Geräusch in den von der Flüssigkeit durchströmten Teilen des Rohrsystems. Die in der Flüssigkeit vorkommenden Luftblasen sind ausserdem oft klein, sog. Mikroblasen, weshalb es schwierig ist, sie aus der Flüssigkeit abzuscheiden.

Zur Lösung dieser Probleme sind verschiedene Vorrichtungen zum Abscheiden von Luft aus der strömenden Flüssigkeit entwickelt worden.

Eine bekannte Methode, Luft aus strömender Flüssigkeit abzuscheiden, besteht darin, dass zu diesem Zweck ein besonderer Behälter im Rohrsystem installiert wird. Der Behälter hat Ein- und Auslassöffnungen, die an das Rohrsystem derart angeschlossen sind, dass die Flüssigkeit quer durch den Behälter zwischen dem Einlass und dem Auslass strömt. Die Querschnittsfläche des Behälters quer zur Durchströmrichtung ist grösser als die Querschnittsfläche der Einlass- und Auslassöffnungen. Wenn die Flüssigkeit durch den Behälter strömt, nimmt deshalb die Strömungsgeschwindigkeit in bekannter Weise ab.

Im Behälter ist ein Auffangglied angeordnet, das eine grosse Berührungsfläche zur Berührung der Flüssigkeit aufweist. Wenn die Flüssigkeit durch den Behälter strömt, passiert sie das Auffangglied und kommt mit der genannten Fläche in Berührung. Dabei berühren die obengenannten Mikroblasen der Flüssigkeit die Oberfläche des Auffangglieds und haften daran. Die am Auffangglied haftenden Mikroblasen sammeln sich danach zu grösseren Luftblasen an. Wenn die Hubkraft dieser grösseren Luftblasen genügend gross ist, lösen sie sich vom Auffangglied und schwimmen aufwärts im Behälter. Im oberen Teil des Behälters wird dann die Luft durch ein Ventil evakuiert. Behälter zur Abscheidung von Luft werden in Rohrsystemen oft dort angebracht, wo die Flüssigkeit eine hohe Temperatur hat, weil, wie gesagt, Luftblasen sich bei einer Temperaturzunahme lösen können.

Ein Beispiel eines Luftabscheiders der obengenannten Art ist in einer von der schwedischen Firma R.E. Thermoprodukter AB herausgegebenen Broschüre, veröffentlicht 1991, gezeigt. Dieser Luftabscheider wird unter dem Warenzeichen SPIROVENT® vermarktet.

Im SPIROVENT-Abscheider besteht das Auffangglied aus einer oder mehreren langgestreckten "Laufreinigungsbürsten" aus Metall, wie sie zur Reinigung eines Gewehrlaufs verwendet werden. Jede Reinigungsbürste weist ein mittiges Rohr auf, das sich parallell zur Mittelachse des Auffangglieds quer zur Durchströmrichtung erstreckt. Auf der Aussenseite dieses Rohrs sitzen die sich radial erstreckenden Borsten der Reinigungsbürste. Jede Borste erstreckt sich im wesentlichen rechtwinklig weg vom Rohr.

Dieses Auffangglied hat den Nachteil, dass Luftblasen, die sich von einer Borste im unteren Teil des Auffangglieds gelöst haben und zum oberen Teil des Behälters schwimmen, nicht frei strömen können, sondern eine Mehrzahl anderer Borsten passieren müssen, wo die Gefahr besteht, dass sie wieder haften. Der Zickzackweg, den die Luftblasen aufwärts im Behälter zurücklegen müssen, erschwert das Ableiten der Luft.

Ein zusätzlicher Nachteil dieses bekannten Luftabscheiders besteht darin, dass wegen der Anordnung der Borsten um das mittige Rohr herum die Dichte der Borsten mit dem Abstand radial von der Mantelfläche des Rohrs abnimmt. Dies bedeutet, dass Luftblasen in der Flüssigkeit, die im äusseren Umfangsabschnitt der Reinigungsbürste strömt, nicht ebenso wirksam aufgefangen werden wie Luftblasen in der Flüssigkeit, die nahe der Mantelfläche des mittigen Rohres durch den Behälter strömt.

Ein weiterer bekannter Ablüfter ist in einer von der schwedischen Firma Tour & Andersson Svenska Försäljnings AB herausgegebenen Broschüre, veröffentlicht 1991, beschrieben. Dieser Ablüfter wird unter der Bezeichnung FLAMCOVENT vermarktet. Ebenso wie der SPIROVENT-Abscheider umfasst der FLAMCOVENT-Abscheider einen zylindrischen Behälter, der im oberen Teil ein Ventil zum Evakuieren von Luft aufweist. Das Auffangglied besteht in diesem Falle aus einer grossen Anzahl kleiner Rohrstücke, welche durcheinander im Behälter liegen. Jedes Rohrstück hat mehrere Schlitze, durch welche die Flüssigkeit strömt.

So wie der SPIROVENT-Abscheider hat der FLAMCOVENT-Abscheider den Nachteil, dass Luftblasen, die sich im unteren Teil des Behälters von den Rohrstücken lösen und zum oberen Teil des Behälters schwimmen, nicht frei strömen können, sondern andere Rohrstücke passieren müssen, was die Ableitung der Luft erschwert, wie oben beschrieben.

Ein zusätzlicher Nachteil des FLAMCOVENT-Abscheiders besteht darin, dass die Rohrstücke so klein sind, dass sie Gefahr laufen, durch die strömende Flüssigkeit aus dem Behälter entfernt zu werden. Dies kann eine verschlechterte Abscheidung von Luft sowie Schäden an anderen Bestandteilen im Rohrsystem, z.B. an den Pumpen, verursachen. Spezielle Anordnungen sind erforderlich, damit die kleinen Rohrstücke im Behälter bleiben werden.

Weil die Rohrstücke im Behälter lose liegen, können sich ihre gegenseitigen Lagen leicht ändern, was dazu führt, dass sich der Strömungswiderstand quer durch den Behälter ändert. Dies ändert den Druckabfall, was an sich eine Ungelegenheit ist. Aufgrund der verhältnismässig komplizierten Ausführung der Rohrstücke ist die Herstellung ausserdem relativ kostspielig.

### Aufgabe der Erfindung

Der vorliegenden Erfindung liegt die Aufgabe zugrunde, die obengenannten Probleme zu lösen, welche mit dem Stand der Technik verknüpft sind, d.h. eine zur Abscheidung von Luft vorgesehene Vorrichtung zu schaffen, die in wirksamer Weise Mikroblasen aus der Flüssigkeit auffängt und diese zum Ableiten aus dem Behälter in geeigneter Weise ansammelt.

Der Erfindung liegt auch die Aufgabe zugrunde, bei der Beseitigung der genannten Nachteile ein einfaches und zuverlässiges Verfahren zum Herstellen eines wirksamen Luftabscheiders zu schaffen.

### Zusammenfassung der Erfindung

Diese und andere Aufgaben, die aus der nachfolgenden Beschreibung hervorgehen werden, sind jetzt gemäss der Erfindung mittels einer Vorrichtung der im nachfolgenden Anspruch 1 angegebenen Art gelöst. Bevorzugte Ausführungsformen der Vorrichtung sind in den untergeordneten Ansprüchen 2-9 angegeben.

Die Aufgaben werden auch durch ein Verfahren nach Anspruch 10 gelöst.

Bei einer bevorzugten Ausführungsform grenzt das Auffangglied vertikale Kanäle ab, welche Luftblasen, die sich am Auffangglied angesammelt und danach von demselben gelöst haben, zum oberen Teil des Behälters ableiten, wo die Luft durch das Ventil evakuiert wird.

Bei einer besonders bevorzugten Ausführungsform umfasst das Auffangglied ein Netz, das gefaltet und danach spiralförmig gewunden worden ist, um die obengenannten Kanäle abzugrenzen, was eine einfache und billige Herstellung gewährleistet.

Gegenüber dem Stand der Technik hat die erfindungsmässige Vorrichtung mehrere Vorteile. Weil das Auffangglied mehrere Schichten mit kleinen Öffnungen umfasst, durch welche die Flüssigkeit beim Durchströmen des Behälters strömt, bekommt das Auffangglied eine grosse Berührungsfläche zur Berührung der Flüssigkeit. Dadurch, dass die Schichten hauptsächlich den ganzen Querschnitt des Behälters in dem von der Flüssigkeit durchströmten Bereich ausfüllen, wird die Flüssigkeit gezwungen, durch die Öffnungen zu strömen, in denen die Mikroblasen aufzufangen sind, was seinerseits bedeutet, dass die Luftblasen in wirksamer Weise angesammelt werden können.

### Kurze Beschreibung der Zeichnungen

Die Erfindung wird jetzt anhand der beigefügten Zeichnungen näher beschrieben, welche eine Vorrichtung in einer z.Zt. bevorzugten Ausführungsform der Erfindung veranschaulichen.

Fig. 1 ist ein Querschnitt durch eine erfindungsmässige Vorrichtung.

Fig. 2 ist ein Querschnitt entlang der Linie II-II in Fig. 1.

Fig. 3-5 veranschaulichen, wie ein Auffangglied von einem Netz gebildet wird, das gefaltet und spiralförmig gewunden wird.

Fig. 6-8 zeigen, wie das spiralförmige Netzt in einen der Vorrichtung zugeordneten Behälter eingeführt wird.

### Beschreibung von Ausführungsformen der Erfindung

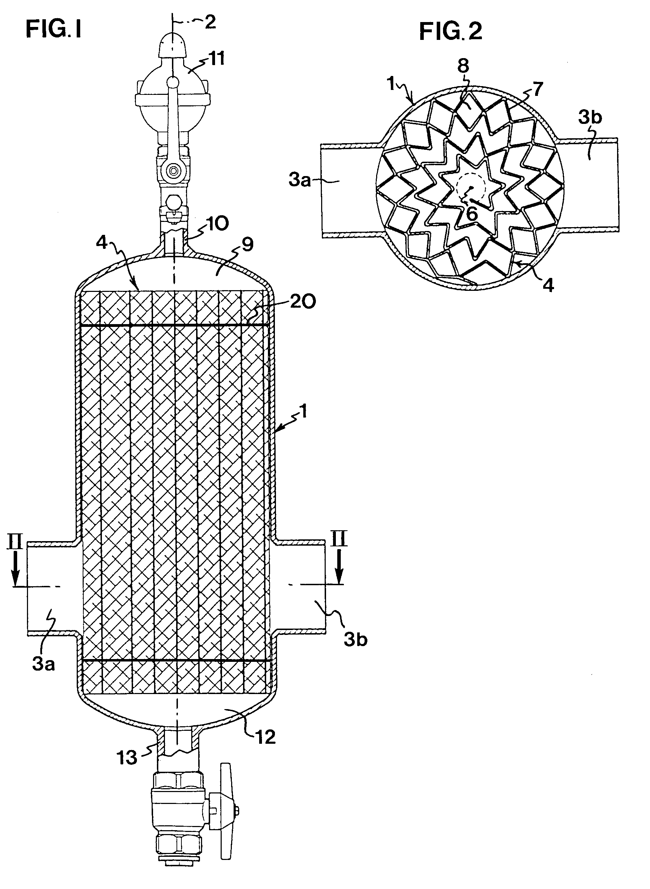

Fig. 1 und Fig. 2 veranschaulichen eine gemäss der Erfindung ausgebildete Vorrichtung zum Abscheiden von Luft aus einer strömenden Flüssigkeit. Die Vorrichtung wird im folgenden Luftabscheider genannt.

Der Luftabscheider ist einem nicht gezeigten Rohrsystem eingesetzt und umfasst einen geschlossenen Behälter 1, der einen zylindrischen Querschnitt aufweist und dessen Mittelachse 2 hauptsächlich vertikal gerichtet ist. Der Behälter 1 hat einen Einlass 3a und einen Auslass 3b, welche in geeigneter Weise an das Rohrsystem angeschlossen sind.

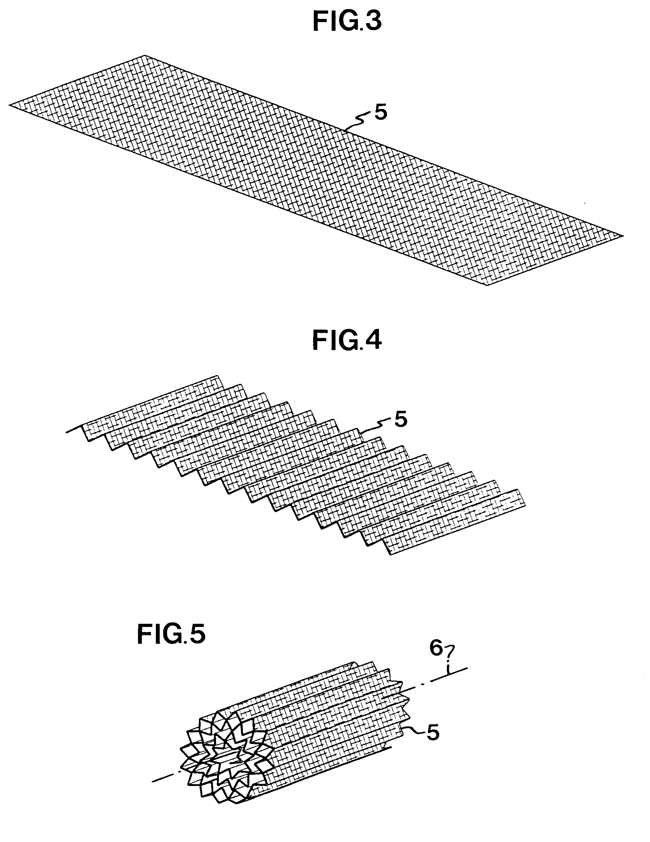

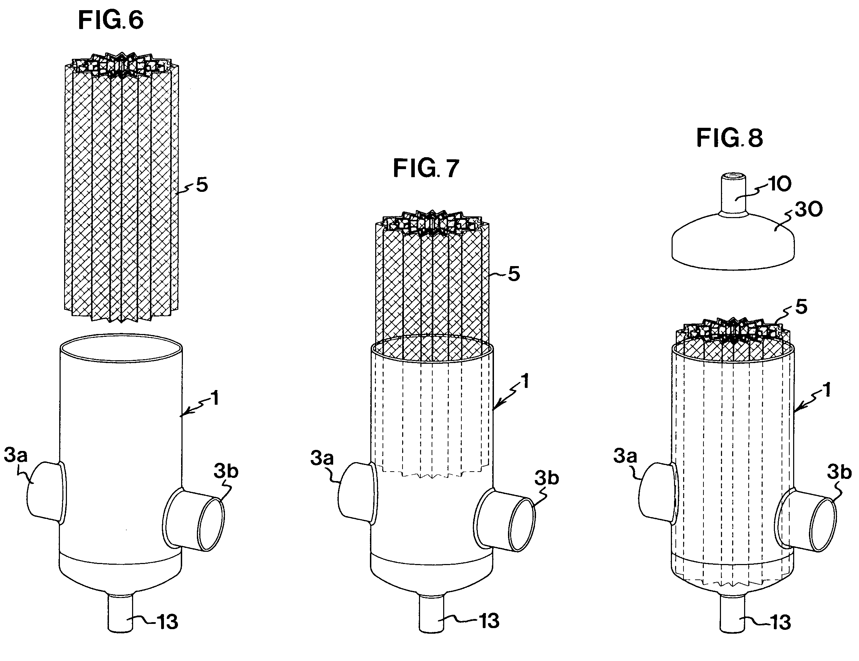

Im Behälter 1 ist ein Auffangglied angeordnet, das mit 4 bezeichnet ist. Das Auffangglied 4 besteht aus einem feinmaschigen Netz 5 (Fig. 3), das gefaltet (Fig. 4) und spiralförmig gewunden (Fig. 5) ist. Das spiralförmig gewundene Netz 5 hat eine Mittelachse 6 (Fig. 5), die parallel zu den Falten des Netzes 5 läuft. Das Netz 5 ist im Behälter 1 derart angeordnet, dass seine Mittelachse 6 parallel zur Mittelachse 2 des Behälters 1 (siehe Fig. 1-2) ist und bei der bevorzugten Ausführungsform mit dieser Mittelachse zusammenfällt. Das gewundene Netz 5 bildet eine Mehrzahl gefalteter Schichten 7 und nimmt im wesentlichen den ganzen Querschnitt des Behälters 1 auf (Fig. 2). Die Schichten 7 des gefalteten, spiralförmig gewundenen Netzes 5 befinden sich hauptsächlich im Abstand voneinander und grenzen eine Mehrzahl vertikaler Kanäle 8 ab, die sich parallel zur Mittelachse 6 des Netzes 5 erstrecken. Die "Spitzen" der Falten können miteinander in Berührung sein.

Im oberen Teil 9 des Behälters ist ein Rohrstutzen 10 vorhanden, an dem ein oberes Ventil 11 angebracht ist. Im unteren Teil 12 des Behälters ist ein weiterer Rohrstutzen 13 angebracht, an dem ein unteres Ventil 14 montiert ist.

Bei Betrieb strömt Flüssigkeit durch den Einlass 3a in den Behälter 1 hinein und danach durch eine grosse Anzahl kleiner Öffnungen im gewundenen Netz 5 in einer Durchströmrichtung hauptsächlich quer zur Mittelachse 6 des Netzes 5. Die Flüssigkeit strömt durch eine Mehrzahl der Schichten 7 des Netzes 5, bevor sie durch den Auslass 3b aus dem Behälter 1 herausströmt.

Wenn die Flüssigkeit durch die kleinen Öffnungen im Netz 5 strömt, berühren die sog. Mikroblasen in der Flüssigkeit die Netzmaschen und haften daran. Mehrere Mikroblasen sammeln sich allmählich zu grösseren Luftblasen am Netz 5 an. Sobald die angesammelten Luftblasen genügend Hubkraft bekommen, lösen sie sich vom Netz 5 und werden durch die Kanäle 8 zum oberen Teil 9 des Behälters 1 geleitet, wo die Luft durch das Ventil 11 evakuiert wird. Dieses Ventil 11 kann von an sich bekannter Art sein und beispielsweise ein schwimmerähnliches Glied enthalten.

Es sei nochmals betont, dass sich die Mittelachse 2 des Behälters 1 und die Mittelachse 6 des Netzes 5 im wesentlichen vertikal erstrecken sollten, damit angesammelte Luftblasen, die sich vom Netz 5 gelöst haben, durch die Kanäle 8 an das obere Ventil 11 effektiv geleitet werden.

Je mehr Öffnungen im Netz 5, durch welche die Flüssigkeit im Behälter 1 strömt, desto grösser ist die Wahrscheinlichkeit, dass die Mikroblasen am Netz 5 haften und von diesem aufgefangen werden. Deshalb wird das Netz 5 derart ausgebildet, dass die Schichten 7 im wesentlichen den ganzen Querschnitt des Behälters 1 in dem von der Flüssigkeit durchströmten Bereich desselben ausfüllen.

Es ist vorteilhaft, jedoch nicht notwendig, dass sich das Auffangglied 4 in senkrechter Richtung im grösseren Teil des Innenraums des Behälters 1 erstreckt. Hierbei muss hauptsächlich die ganze Flüssigkeit durch mehrere Schichten 7 strömen, gleichzeitig wie die Kanäle 8 die Luftblasen bis zum oberen Teil 9 des Behälters 1 leiten.

Es ist auch vorteilhaft, dass das Netz 5 unter Vorspannung gegen die Mantelfläche des Behälters 1 im Behälter 1 angeordnet ist, damit keine Flüssigkeit an der Mantelfläche des Behälters 1 strömen kann, ohne das Netz 5 zu berühren.

Die Querschnittsfläche des Behälters 1 quer zur genannten Durchströmrichtung ist grösser als die Querschnittsfläche der Ein- und Auslässe 3a, 3b. Die Strömungsgeschwindigkeit nimmt somit in bekannter Weise im Behälter 1 ab, was die Fähigkeit des Netzes 5 verbessert, die in der strömenden Flüssigkeit vorkommenden Mikroblasen aufzufangen.

Das Netz 5 und/oder die reduzierte Strömungsgeschwindigkeit durch den Behälter 1 bedeutet, dass in der Flüssigkeit vorkommende schwerere Teilchen (Schmutz) zum unteren Teil 12 des Behälters 1 sinken und sich dort ansammeln. Diese Teilchen können abgelassen werden, dadurch, dass man das Ventil 14 öffnet und eventuell gleichzeitig Flüssigkeit durch das Ventil 11 hineinpresst, damit diese Flüssigkeit im Behälter 1 nach unten strömt und durch das Ventil 14 hinausströmt, wobei die Teilchen entfernt werden.

In einem Verfahren zur Herstellung eines Luftabscheiders gemäss der Erfindung (Fig. 3-8) wird ein langestreckter, flacher Zuschnitt, vorzugsweise ein feinmaschiges Netz 5, gefaltet, um eine Mehrzahl quergerichteter Falten zu bilden. Der gefaltete Zuschnitt 5 wird spiralförmig gewunden und bildet ein dem Auffangglied 4 entsprechendes Paket. Das Paket, das federnd ist, wird vorteilhaft von Spannbändern 20 zusammengehalten (Fig. 1). Danach wird das Paket in den Behälter 1 hineingeschoben und derart angeordnet, dass seine Mittelachse 6 im wesentlichen mit der Mittelachse 12 des Behälters 1 zusammenfällt und die Falten Kanäle 8 bilden, die sich hauptsächlich parallel zu den genannten Achsen 2, 6 erstrecken. Schliesslich wird der Behälter 1 durch einen mit dem oberen Ventil 11 versehenen Deckel 30 verschlossen.

Falls Vorspannung gegen die innere Mantelfläche des Behälters 1 erwünscht ist, werden die Spannbänder 20 entfernt, so dass der spiralförmig gewundene Zuschnitt 5 gegen die genannte Mantelfläche ausgespannt wird.

Der Zuschnitt 5 kann selbstverständlich zu einer anderen Form gefaltet werden, beispielsweise sinusförmigen Falten, statt der in den Figuren gezeigten Sägezahnform. Ferner kann der Zuschnitt 5 alternativ eine perforierte Metallplatte sein, die gefaltet wird (nicht gezeigt).

Selbstverständlich kann der Fachmann andere geeignete Mittel als die oben beschriebenen verwenden, um im Rahmen der untergeordneten Ansprüchen dieselbe technische Wirkung zu erzielen. Somit kann das Auffangglied beispielsweise mehrere parallele, an einem Körper angeordnete Schichten umfassen, die sich quer zur Durchströmrichtung erstrecken. Alternativ können diese Schichten dadurch erzeugt werden, dass ein Netz o.dgl. mehrmals in solcher Weise gefaltet wird, dass parallele Schichten quer zur Durchströmrichtung erzeugt werden. Falls ein vorgespanntes Auffangglied verwendet wird, braucht dieses nicht gegen die innere Mantelfläche des Behälters vorgespannt zu sein, sondern kann gegen eine Käfigkonstruktion oder Distanzglieder vorgespannt sein, die in Verbindung mit der genannten Mantelfläche angeordnet sind. Ferner können verschiedene Distanzglieder zwischen den Schichten eingesetzt sein.

## Patentansprüche

1. Vorrichtung zur Abscheidung von Luft aus einer strömenden Flüssigkeit, umfassend: einen Behälter (1), der einen hauptsächlich zylindrischen Querschnitt aufweist und dessen Mittelachse (2) hauptsächlich vertikal gerichtet ist, wobei der Behälter (1) von der Flüssigkeit in einer Richtung hauptsächlich quer zur genannten Mittelachse (2) durchströmt wird; ein im Behälter (1) angeordnetes Auffangglied (4) zum Auffangen von in der durchströmenden Flüssigkeit vorkommenden kleinen Luftblasen, sog. Mikroblasen, und zum Ansammeln dieser Mikroblasen zu grösseren Luftblasen, die eine derartige Hubkraft haben, dass sie fähig sind, nach oben in einen oberen Teil (9) des Behälters (1) zu schwimmen und sich dort anzusammeln, wobei das Auffangglied (4) eine hauptsächlich parallel zur genannten Mittelachse (2) gerichtete Achse (6) aufweist; und ein im oberen Teil (9) des Behälters (9) angeordnetes Ventil (11) zum Evakuieren der im Auffangglied (4) aufgefangenen Luft, dadurch **gekennzeichnet**, dass das Auffangglied (4) eine Mehrzahl Schichten (7) umfasst, die sich im wesentlichen parallel zur genannten Achse (6) erstrecken und eine grosse Anzahl kleiner Öffnungen aufweisen, durch welche die Flüssigkeit strömt, um das genannte Auffangen von Mikroblasen zustandezubringen; dass sich die Schichten (7) hauptsächlich im Abstand voneinander befinden und derart angeordnet sind, dass die Flüssigkeit gezwungen ist, durch mehrere Schichten zu strömen; und dass das Auffangglied (4) im wesentlichen den ganzen Querschnitt des Behälters (1) in dem von der Flüssigkeit durchströmten Bereich aufnimmt.

2. Vorrichtung nach Anspruch 1, dadurch **gekennzeichnet**, dass das Auffangglied (4) aus einem flachen Zuschnitt (5) gebildet ist.

3. Vorrichtung nach Anspruch 2, dadurch **gekennzeichnet**, dass der Zuschnitt (5) derart ausgebildet ist, dass er zwischen den Schichten (7) Kanäle (8) abgrenzt, die sich im wesentlichen parallel zur Mittelachse (6) des Behälters (1) erstrecken und die dazu dienen, die grösseren angesammelten Luftblasen in den oberen Teil (9) des Behälters (1) zu leiten.

4. Vorrichtung nach Anspruch 2 oder 3, dadurch **gekennzeichnet**, dass der Zuschnitt (5) aus einem feinmaschigen Netz, vorzugsweise aus Metall, besteht.

5. Vorrichtung nach Anspruch 2 order 3, dadurch **gekennzeichnet**, dass der Zuschnitt (5) aus einer perforierten Scheibe, vorzugsweise einer Platte aus Metall, besteht.

6. Vorrichtung nach einem der vorhergehenden Ansprüche, dadurch **gekennzeichnet**, dass das Auffangglied (4) unter Vorspannung gegen die innere Mantelfläche des Behälters (1) federnd angeordnet ist.

7. Vorrichtung nach einem der Ansprüche 2-6, dadurch **gekennzeichnet**, dass der Zuschnitt (5) zur Bildung der genannten Schichten (7) spiralförmig gewunden ist.

8. Vorrichtung nach einem der Ansprüche 2-7, dadurch **gekennzeichnet**, dass der Zuschnitt (5) derart gefaltet ist, dass sich die Falten im wesentlichen parallel zur Mittelachse (6) des Auffanggliedes (4) erstrecken.

9. Vorrichtung nach den Ansprüchen 3 und 8, dadurch **gekennzeichnet**, dass die Falten Kanäle (8) abgrenzen.

10. Verfahren zur Herstellung einer Vorrichtung nach Anspruch 1, **gekennzeichnet** durch die Massnahmen:
a) dass ein langgestreckter, flacher Zuschnitt, vorzugsweise ein feinmaschiges Netz oder eine perforierte Platte, zur Bildung einer Mehrzahl quergerichteter Falten gefaltet wird,
b) dass der gefaltete Zuschnitt zur Bildung eines dem Auffangglied entsprechenden Pakets spiralförmig gewunden wird,
c) dass das spiralförmig gewundene Paket in den Behälter hineingeschoben wird,
d) dass das Paket im Behälter derart angeordnet wird, dass seine Mittelachse im wesentlichen mit der Mittelachse des Behälters zusammenfällt und die Falten Kanäle bilden, die sich hauptsächlich parallel zu den genannten Achsen erstrecken, und
e) dass der Behälter verschlossen wird.
